# FASCICULE DE BREVET EUROPEEN

(11) **EP 3 283 414 B1**
(45) Date de publication et mention de la délivrance du brevet: **01.11.2023**
(21) Numéro de dépôt: 16722281.9
(22) Date de dépôt: 07.04.2016
(51) Int. Cl.: B65G 47/14, B65G 47/256, B29C 49/42

(54) **DISPOSITIF D'ALIGNEMENT ET DE REDRESSEMENT DE PRÉFORMES COMPORTANT UN BOL DE CENTRIFUGEUSE ÉQUIPÉ DE MOYENS D'ÉJECTION DE PRÉFORMES MAL ALIGNÉES**
VORRICHTUNG ZUM AUSRICHTEN UND AUFRICHTEN VON VORFORMEN MIT EINER SCHALENZENTRIFUGE MIT MITTELN ZUM AUSSTOSSEN VON FEHLAUSGERICHTETEN VORFORMEN
DEVICE FOR ALIGNING AND RIGHTING PREFORMS, COMPRISING A BOWL CENTRIFUGE EQUIPPED WITH MEANS FOR EJECTING MISALIGNED PREFORMS

(30) Priorité: 16.04.2015 FR 1553374
(43) Date de publication de la demande: 21.02.2018
(73) Titulaire: Sidel Participations, 76930 Octeville-sur-Mer (FR)
(72) Inventeur: DOUDEMENT, Denis, 76930 Octeville-sur-mer (FR); DEBRIS, Anthony, 76930 Octeville-sur-mer (FR); WILLIG, Frédéric, 76930 Octeville-sur-mer (FR); MAZO, Eric, 76930 Octeville-sur-mer (FR)
(74) Mandataire: Sidel Group
(86) Numéro de dépôt international: PCT/FR2016/050794
(87) Numéro de publication internationale: WO 2016/166446

(56) Documents cités:
- EP-A1- 1 335 870
- EP-A1- 2 048 097
- EP-A1- 2 554 356
- WO-A1-00/23254
- WO-A1-2013/185930

## Description

### DOMAINE TECHNIQUE DE L'INVENTION

L'invention concerne un dispositif d'alignement en une file et de redressement de préformes, le dispositif étant destiné à être appliqué à des préformes axisymétriques présentant un col séparé d'un corps par une face annulaire de support, le dispositif comportant un bol de centrifugeuse formé par :
- un plateau circulaire horizontal tournant autour d'un axe vertical ;
- une rambarde périphérique fixe ;
- au moins un premier secteur angulaire d'alignement des préformes contre la rambarde ;
- au moins un deuxième secteur angulaire de redressement des préformes qui est agencé en aval dudit premier secteur angulaire, et le long duquel le bol présente un interstice périphérique pour permettre le redressement de préformes alignées soutenues par leur face de support, le corps pendant à l'extérieur du bol à travers ledit interstice tandis que le col demeure à l'intérieur du bol ;
- au moins un passage de sortie agencé en aval dudit secteur angulaire de redressement selon le sens de rotation du plateau.

### ARRIERE PLAN TECHNIQUE DE L'INVENTION

Le dispositif est destiné à être mis en oeuvre dans une installation de fabrication de récipients en matériau thermoplastique et notamment en polyéthylène téréphtalate (PET) par formage, notamment par soufflage ou étirage-soufflage, de préformes. Une telle installation permet de produire des récipients en très grande série à des cadences très élevées, par exemple supérieures à 85000 bouteilles par heure.

Selon une technique bien connue, de tels récipients sont produits en deux étapes principales. Dans une première étape, on procède au moulage par injection d'une préforme en PET. Cette préforme comporte un corps sensiblement tubulaire qui est fermé à l'une de ses extrémités axiales, l'extrémité opposée étant ouverte par l'intermédiaire d'un col. Le col présente, dès cette opération de moulage par injection, la forme définitive du col du récipient. Généralement, le col du récipient comporte un filetage.

La préforme comporte généralement une face annulaire de support qui fait saillie radialement vers l'extérieur par rapport au reste du corps et qui est orientée axialement vers l'extrémité fermée du corps. Une telle face de support est par exemple portée par une collerette de support annulaire qui s'étend radialement en saillie vers l'extérieur par rapport au reste de la préforme et qui est agencée à la base du col.

Il existe des installations dans lesquelles les préformes, une fois injectées, sont directement transmises vers la station de formage, chaque préforme étant transportée individuellement.

Toutefois, dans de nombreux cas, les préformes sont fabriquées par injection en un premier endroit et sont moulées par soufflage à la forme définitive du récipient en un second endroit sur une installation de fabrication spécifique. Une telle technologie permet de procéder à l'opération de moulage par soufflage le plus près possible du lieu d'embouteillage, l'opération d'injection pouvant être effectuée en n'importe quel endroit. En effet, il est relativement aisé et peu coûteux de transporter des préformes de taille réduite, tandis que transporter des récipients après soufflage présente l'inconvénient d'être économiquement peu rentable du fait de leur volume très important.

Dans le cas où la station d'injection et l'installation de fabrication par formage sont deux machines totalement indépendantes, les préformes sont généralement livrées en vrac. La station de soufflage dispose donc d'un dispositif d'alimentation en préformes qui est équipé d'un dispositif d'alignement en une file et de redressement des préformes. La présente invention concerne un tel dispositif.

On a déjà proposé un dispositif d'alignement et de redressement comportant un bol de centrifugeuse. Les préformes sont jetées en vrac sur un plateau tournant formant le fond du bol. Les préformes sont ensuite projetées par la force centrifuge contre une rambarde périphérique. Un espace vertical réservé entre la rambarde et le plateau tournant permet le passage du corps des préformes tout en les retenant par leur collerette. Les préformes sont ainsi alignées à la périphérie du bol, leur axe principal présentant une orientation sensiblement radiale sous l'effet de la force centrifuge. Les préformes présentent ainsi un axe qui s'étend sensiblement orthogonalement à la fois à la direction de la gravité et à la direction de déplacement des préformes.

Les préformes ainsi alignées et orientées de manière similaire sont ensuite entraînées vers une sortie tangentielle du bol sous l'effet du mouvement de rotation du plateau tournant.

Dans ce type de dispositif, certaines préformes sont mal alignées voire non alignées, ces deux types de préformes étant par la suite désignées comme des préformes non alignées. Pour permettre de trier les préformes non alignées des préformes correctement alignées, le dispositif connu comporte des moyens de triage qui sont agencés en amont d'un point de redressement des préformes correctement alignées.

Ces moyens de triage consistent en un déflecteur qui autorise le passage des préformes correctement alignées vers une sortie du bol de centrifugeuse, tandis que les préformes non alignées sont orientées de manière à réaliser un nouveau tour de bol en espérant qu'elles seront correctement alignées à leur prochain passage au niveau des moyens de triage.

Cependant, les préformes non alignées ne sont pas expulsées activement de la file des préformes correctement alignées. Il peut ainsi se produire un blocage d'une préforme non alignée en travers de la file des préformes correctement alignées, provoquant ainsi un embouteillage.

En outre, certaines préformes sont incorrectement alignées car elles sont emboîtées ensemble. Le fait de faire repartir de telles préformes emboîtées pour un nouveau tour ne permettra pas de les déboîter. Elles encombreront ainsi le bol de centrifugeuse jusqu'à ce qu'elles soient expulsées manuellement.

Le document EP 2 048 097 A1 divulgue un dispositif selon le préambule de la revendication 1.

### BREF RESUME DE L'INVENTION

L'invention propose un dispositif selon la revendication 1. Selon d'autres caractéristique du dispositif :
- chaque palette balaie au moins un espace qui est situé au-dessus du plateau tournant à une distance verticale inférieure à un diamètre minimal du corps de la préforme, et à une distance radiale bord du plateau tournant qui est inférieure audit diamètre minimal de la préforme pour éjecter les préformes incorrectement alignées globalement en direction du centre du plateau tournant ;
- chaque palette balaie un espace qui s'étend verticalement au-dessus de l'interstice à une distance sensiblement égale à la hauteur du col d'une préforme destinée à être alignée correctement ;
- chaque palette présente une découpe correspondant à la dimension d'un col de préforme destinée à être alignée correctement ;
- l'axe de rotation de la roue est sensiblement vertical ;
- le dispositif comporte au moins un déflecteur fixe qui est agencé au-dessus du plateau tournant à une distance inférieure au diamètre minimal du corps d'une préforme et qui s'étend jusqu'en aval de la sortie en se rapprochant du centre du plateau tournant selon le sens de rotation du plateau tournant ;
- le dispositif comporte une première roue à palettes qui est agencée directement en amont du déflecteur ;
- le dispositif comporte une deuxième roue à palettes qui est interposée entre le déflecteur et le passage de sortie selon le sens de rotation du plateau tournant ;
- la première roue à palettes est agencée en aval du secteur angulaire de redressement.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente schématiquement un dispositif d'alignement et de redressement de préformes comportant un bol de centrifugeuse conformément aux enseignements de l'invention ;
- la figure 2 est une vue de face qui représente une préforme adaptée pour être utilisée avec le dispositif de la figure 1, l'axe de la préforme étant ici orienté verticalement ;
- la figure 3 est une vue de dessus qui représente le bol de centrifugeuse de la figure 1 ;
- la figure 4 est une vue en coupe radiale d'un secteur d'alignement du bol de centrifugeuse de la figure 1 qui représente la rambarde périphérique et le plateau tournant du bol de centrifugeuse ainsi qu'une préforme alignée ;
- la figure 5 est une vue en perspective qui représente un déversoir du dispositif de la figure 1 ;
- la figure 6 est une vue de dessus qui représente une partie du secteur d'alignement du bol de centrifugeuse, ainsi que les différentes étapes du parcours d'une préforme déversée dans le bol de centrifugeuse ;
- la figure 7 est une vue en coupe radiale d'un secteur de redressement du bol de centrifugeuse de la figure 1 qui représente la rambarde périphérique et le plateau tournant du bol de centrifugeuse ainsi qu'une préforme alignée et redressée ;
- la figure 8 est une vue schématique selon une direction radiale qui représente une préforme alignée le long de la rambarde dans le secteur d'alignement du bol de centrifugeuse de la figure 1 ;
- la figure 9 est une vue de dessus de la figure 8 ;
- la figure 10 est une vue similaire à celle de la figure 8 qui représente la préforme de la figure 8 en cours de redressement au début du secteur de redressement du bol de centrifugeuse de la figure 1 ;
- la figure 11 est une vue de dessus de la figure 10 ;
- la figure 12 est une vue similaire à celle de la figure 10 qui représente la préforme de la figure 10 redressée dans le secteur de redressement du bol de centrifugeuse de la figure 1 ;
- la figure 13 est une vue de dessus de la figure 12 ;
- la figure 14 est une vue de dessus qui représente une zone du bol de centrifugeuse de la figure 1 située à cheval sur le secteur de redressement et sur un secteur de triage et qui comporte une roue démêleuse primaire en train d'écarter une préforme mal alignée ;
- la figure 15 est une vue en coupe radiale du bol passant par l'axe de rotation de la roue démêleuse primaire qui représente la roue démêleuse primaire de la figure 14 ;
- la figure 16 est une vue de dessus qui représente une partie aval du secteur de triage du bol de centrifugeuse de la figure 1 et qui comporte une roue démêleuse secondaire en train d'écarter une préforme mal alignée ;
- la figure 17 est une vue en coupe radiale du bol passant par l'axe de rotation de la roue démêleuse secondaire qui représente la roue démêleuse secondaire de la figure 16.

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif les orientations locales suivantes pour chaque préforme présente dans le bol de centrifugeuse du dispositif :
- radiale "R" dirigée de l'intérieur vers l'extérieur depuis l'axe de rotation du plateau tournant ;
- tangentiel "T" qui est orthogonale à la direction radiale "R" et qui s'étend dans le plan du plateau tournant, dirigée d'amont en aval selon le sens de rotation du plateau tournant ;
- verticale "V" dirigée de bas en haut selon le sens inverse de la gravité terrestre.

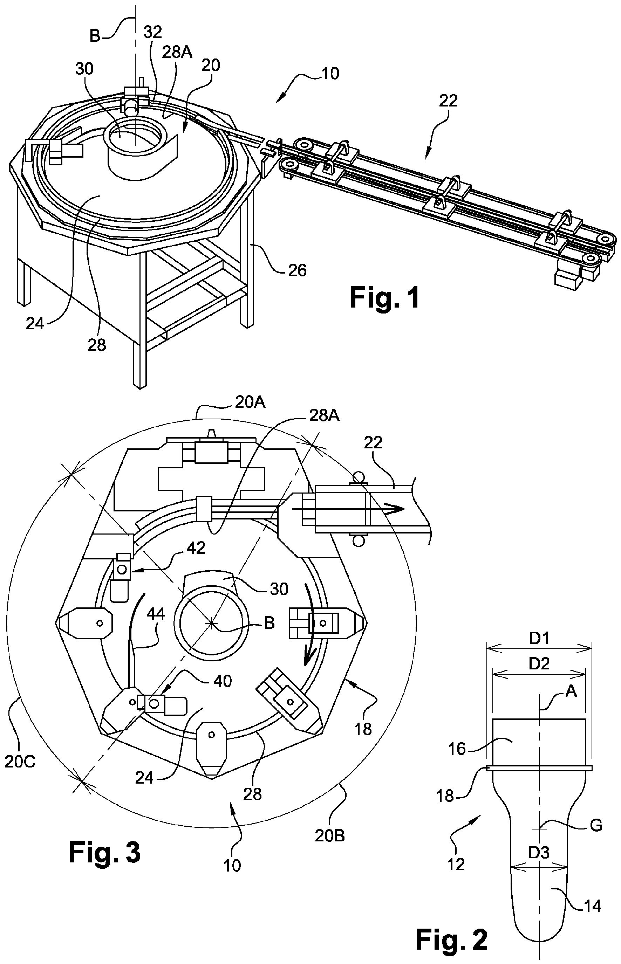

On a représenté à la figure 1 un dispositif 10 d'alignement en une file et de redressement de préformes 12 destiné à faire partie d'une installation (non représentée) de fabrication de récipient en matériau thermoplastique par formage, notamment par soufflage ou par étirage-soufflage.

Un exemple de préforme 12 destinée à être utilisée avec le dispositif 10 est illustré à la figure 2. Une telle préforme 12 est réalisée en matériau thermoplastique, ici en PET. Elle est classiquement obtenue par moulage par injection. Elle présente une forme sensiblement axisymétrique autour d'un axe "A" principal représenté verticalement à la figure 2.

Elle comporte un corps 14 en forme de tube allongé selon l'axe "A" principal présentant une extrémité axiale fermée et qui présente à son extrémité opposée, représenté en haut à la figure 2, un col 16 ouvert axialement.

La préforme 12 comporte aussi une face 18 annulaire de support qui est orientée axialement vers l'extrémité fermée de la préforme 12, qui fait saillie radialement par rapport au reste du corps 14, et qui est agencée au-dessus d'un centre "G" de gravité de la préforme 12. Le terme "annulaire" signifie que la face de support fait le tour de la préforme 12 soit de manière continue, soit de manière discontinue. Dans ce dernier cas, la face annulaire est par exemple formée de segments disjoints qui font le tour de la préforme qui sont néanmoins suffisamment rapprochés pour que la préforme puise être soutenue entre deux supports diamétralement opposés quelle que soit la position de la préforme autour de son axe principal.

Dans l'exemple représenté, la base du col 16, à la jonction avec le corps 14, présente une collerette qui s'étend radialement en saillie par rapport au reste de la préforme 12. La face inférieure de la collerette forme ainsi ladite face 18 de support.

En variante, la collerette peut être agencée ailleurs qu'à la base du col, par exemple au niveau du buvant.

Selon une autre variante, la face de support est par exemple formée par une face inférieure d'un filetage du col.

Selon encore une autre variante, la face de support est rapportée sur la préforme, par exemple par l'intermédiaire d'un bouchon.

Le diamètre "D1" externe de la face 18 de support, dans le cas présent de la collerette, est ainsi supérieur au diamètre "D2" externe maximal du corps 14. Dans l'exemple représenté à la figure 2, le tronçon d'extrémité fermée du corps 14 présente ici un diamètre "D3" externe minimal.

Le col 16 présente sa forme définitive, tandis que le corps 14 est destiné à être étiré lors d'une opération ultérieure de formage pour former le corps du récipient fini.

En outre, le poids du corps 14 des préformes 12 utilisées est supérieur au poids du col 16, incluant celui de la collerette. Ainsi, le centre "G" de gravité de la préforme 12 est situé sous la face 18 de support en référence à la figure 2. Ainsi, une préforme 12 soutenue par sa face 18 de support en reposant sur deux supports diamétralement opposés s'orientera naturellement par gravité col 16 en haut.

L'exemple représenté à la figure 2 est non limitatif. On comprendra que le dispositif 10 et le procédé associé sont destinés à être appliqué à tout type de préformes 12 présentant une face 18 de support faisant saillie radialement par rapport au reste du corps 14, et présentant un centre de gravité décalé axialement vers le corps par rapport à ladite face 18 de support.

En revenant à la figure 1, le dispositif 10 comporte principalement un bol 20 de centrifugeuse ainsi qu'un convoyeur 22 de sortie des préformes alignées et redressées.

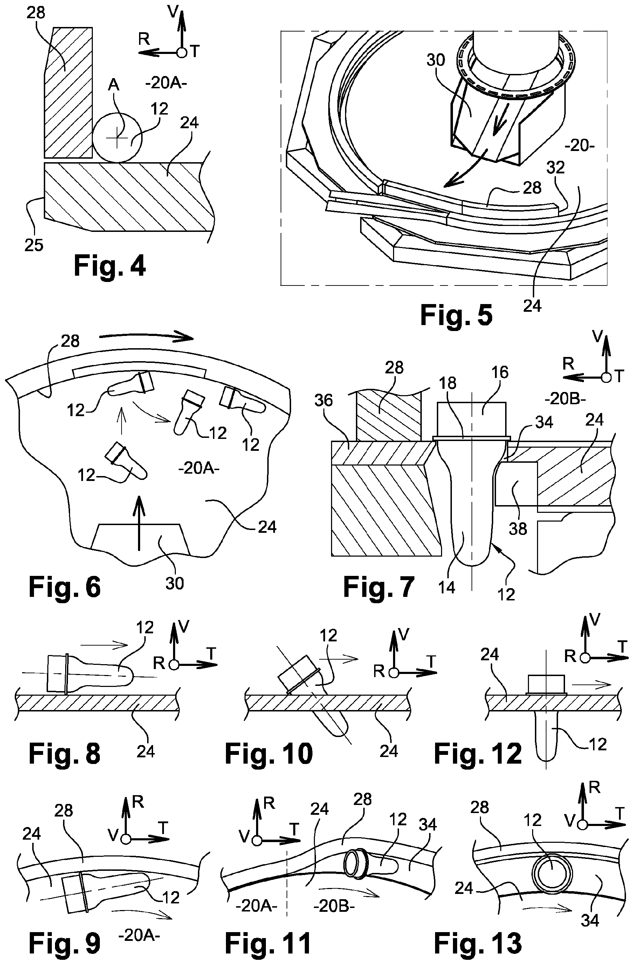

Le bol 20 de centrifugeuse comporte un plateau 24 circulaire horizontal tournant autour d'un axe "B" vertical central. Le plateau 24 tournant présente ainsi un bord 25 extérieur circulaire représenté à la figure 4. La face supérieure du plateau 24 tournant délimite verticalement vers le bas l'intérieur du bol 20 de centrifugeuse. Ainsi, le plateau 24 forme le fond du bol 20.

Le plateau 24 tournant présente un diamètre externe très supérieur aux dimensions des préformes 12.

Le plateau 24 tournant est entraîné en rotation à régime constant, ici dans un sens horaire en vue de dessus, par exemple par un moteur (non représenté) qui est agencé sous le plateau 24 tournant. La vitesse de rotation est par exemple commandée de manière que le bord 25 extérieur du plateau 24 tournant se déplace entre 2 et 3 mis.

Le plateau 24 tournant est ici porté par une table 26 de support. La table 26 de support présente des pieds qui sont avantageusement réglable en hauteur pour permettre de régler l'assiette du plateau 24 tournant.

Le bol 20 de centrifugeuse est délimité radialement vers l'extérieur par une rambarde 28 périphérique fixe qui est ici fixée à la table 26 de support. Cette rambarde 28 a notamment pour première fonction de retenir les préformes projetées vers l'extérieur par la force centrifuge produite par la rotation du plateau 24 tournant, et pour deuxième fonction de guider le déplacement des préformes 12 jusqu'à un passage 32 de sortie du bol 20.

Les préformes 12 sont destinées à être déversées en vrac sur le plateau 24 tournant par l'intermédiaire d'un déversoir 30 fixe. Le déversoir 30 est ici agencé au centre du plateau 24 tournant. Le déversoir 30 est conçu pour déverser les préformes 12 en vrac, radialement en direction d'une première portion 28A de réception de la rambarde 28. Le déversoir 30 se présente ici sous la forme d'un toboggan alimenté en préformes 12 par le haut par l'intermédiaire d'un tapis élévateur (non représenté). Le haut du déversoir 30 présente néanmoins une hauteur relativement faible, par exemple à environ 40 cm au-dessus du plateau 24.

Comme cela est illustré à la figure 3, pour les besoins de la description, on divisera le bol en trois zones fixes par rapport à la table 26, chacune formée par un secteur angulaire s'étendant autour de l'axe "B" du plateau 24 tournant.

Un premier secteur 20A angulaire dit d'alignement des préformes 12 s'étend face à la sortie du déversoir 30. Ce secteur 20A angulaire d'alignement inclut la portion 28A de réception de la rambarde 28.

Un deuxième secteur 20B angulaire de redressement des préformes 12 alignées est agencé directement en aval du premier secteur 20A angulaire d'alignement. De manière non limitative, il s'étend ici globalement à 180°.

Un troisième secteur 20C angulaire de triage des préformes incorrectement alignées est agencé directement en aval du deuxième secteur 20B angulaire de redressement et directement en amont du premier secteur 20A angulaire d'alignement. A l'extrémité aval de ce secteur 20C de triage, le passage 32 de sortie des préformes 12 est ouvert dans la rambarde 28 pour permettre de guider les préformes 12 correctement alignées et redressées vers le convoyeur 22. Le convoyeur 22 passe ici derrière la portion 28A de réception de la rambarde 28.

La dénomination de chacun de ces secteurs 20A, 20B, 20C fournit une indication sur leur fonction. On comprendra par la suite que des préformes 12 non alignées au niveau du premier secteur 20A d'alignement peuvent néanmoins être alignées et redressées au niveau du deuxième secteur 20B angulaire selon les circonstances.

Sur toute la périphérie du premier secteur 20A angulaire d'alignement, un jeu de fonctionnement est réservé entre la rambarde 28 et le plateau 24 tournant. Ce jeu permet la rotation du plateau 24 tournant, mais il est toutefois suffisamment faible pour permettre à la rambarde 28 de retenir la totalité de la préforme 12 à l'intérieur du bol 20. Ce jeu est ainsi inférieur au diamètre "D3" minimal du corps 14 de la préforme 12.

Comme représenté à la figure 4, sur ce secteur 20A d'alignement, la rambarde 28 s'étend verticalement au-dessus du plateau 24 tournant, de manière que le bord 25 externe du plateau 24 tournant est agencé à l'extérieur du bol 20 de centrifugeuse.

Lors du fonctionnement du dispositif 10, comme représenté aux figures 5 et 6, lors d'une première étape de déversement, les préformes 12 déversées en vrac par le déversoir 30 sont projetées radialement contre une portion 28A de réception de la rambarde 28 sous l'effet conjugué de leur vitesse radiale de glissement en sortie du déversoir 30 et de la force centrifuge produite par la rotation du plateau 24 tournant. Dans le même temps, le plateau 24 tournant commence aussi à entraîner dans sa rotation les préformes 12 tangentiellement vers l'aval.

Lors d'une deuxième étape d'alignement, les préformes 12 sont maintenues à l'intérieur du bol 20 par la rambarde 28, puis, après un ou plusieurs rebonds contre la rambarde 28, les préformes 12 perdent progressivement de la vitesse selon la direction radiale. Elles sont alors constamment maintenues radialement contre la rambarde par la force centrifuge. On a représenté le trajet suivi par une même préforme 12 à la figure 6 depuis son arrivée via le déversoir 30 jusqu'à sa position stable contre la rambarde 28. Les préformes 12 sont alors entraînées en déplacement purement tangentiel dans un sens horaire par le plateau 24 tournant le long de la rambarde 28.

Dans cette configuration, les préformes 12 occupent naturellement la position la plus stable dans laquelle leur axe "A" principal est orienté selon une direction tangente par rapport au plateau 24 tournant.

La plupart des préformes 12 présentes dans le secteur 20A angulaire d'alignement du bol 20 sont ainsi alignées tangentiellement contre la rambarde 28, leur axe "A" principal étant orienté sensiblement tangentiellement à leur direction de déplacement. L'écart tangentiel entre deux préformes 12 alignées successives est aléatoire car le plateau 24 tournant est parfaitement plan et ne présente pas de crans d'indexation des préformes 12. Les préformes 12 peuvent ainsi être en contact par leurs extrémités sous l'effet de la force centrifuge qui oblige les préformes 12 à glisser les unes par rapport aux autres. Les préformes 12 occupent ainsi de manière optimal toute la longueur périphérique du bol 20.

A ce stade, les préformes 12 sont orientées aléatoirement col vers l'amont ou vers l'aval sans incidence pour la suite du procédé. Les préformes 12 ainsi alignées poursuivent leur déplacement périphérique dans le secteur 20B de redressement.

Le fait que les préformes 12 soient maintenues sur le plateau 24 tournant permet de les maintenir plaquées radialement contre la rambarde 28. Ainsi, les préformes 12 sont guidées de manière stable par la rambarde 28 durant leur déplacement autour du bol 20.

Comme représenté à la figure 7, sur le deuxième secteur 20B angulaire de redressement du bol 20 de centrifugeuse, le bol 20 présente un interstice 34 périphérique formé par écartement radial de la rambarde 28 par rapport au bord 25 externe du plateau 24 tournant. La largeur radiale de l'interstice 34 est comprise entre le diamètre "D2" maximal du corps 14 et le diamètre "D1" de la face 18 de support, dans le cas présent de la collerette. Cet interstice 34 se prolonge jusqu'au passage 32 de sortie des préformes 12.

Au moins tout le long du deuxième secteur 20B de redressement, la rambarde 28 présente un rail 36 de support de la face 18 de support. Le rail 36 s'étend en saillie radialement vers l'intérieur au même niveau que la face supérieure du plateau 24 tournant pour délimiter l'interstice 34 vers l'extérieur. Le rail 36 se prolonge ici jusqu'au passage 32 de sortie.

Ainsi, les préformes 12 sont susceptibles d'être soutenues par leur face 18 de support, dans le cas présente par leur collerette, qui repose en deux points diamétralement opposée sur la face supérieure horizontale du plateau 24 tournant, d'une part, et sur une face supérieure horizontale du rail 36, d'autre part, le corps 14 des préformes 12 pendant sous le niveau du plateau 24 tournant à travers ledit interstice 34. Les deux points d'appui sont alignés radialement. Le rail 36 permet de soutenir les préformes 12 de manière stable.

Ainsi, lors d'une troisième étape de redressement, comme représenté aux figures 8 et 9, les préformes 12 alignées lors de la deuxième étape arrivent depuis le premier secteur 20A d'alignement en étant alignées en une file le long de la rambarde 28, leur axe "A" principal orienté tangentiellement. Les préformes 12 alignées sont disposées aléatoirement col 16 en amont ou col 16 en aval sans que cela n'ait d'influence sur leur redressement.

Lorsque le corps 14 de chaque préforme 12 arrive au-dessus de l'interstice 34, le corps 14 commence à tomber, comme représenté aux figures 10 et 11, faisant ainsi basculer la préforme 12 autour d'un axe radial passant par les points d'appui de la face 18 de support, dans le cas présent de la collerette, de la préforme. Le basculement se poursuit jusqu'à ce que l'axe "A" principal de la préforme 12 soit vertical, éventuellement après quelques balancement autour de l'axe radial. La préforme 12 est alors soutenues par sa face 18 de support reposant conjointement sur le rail 36 et sur le plateau 24 tournant, comme indiqué aux figures 12 et 13. La préforme 12 est ainsi redressée, col 16 en haut. Une préforme 12 ainsi redressée est guidée extérieurement par le rail 36 de la rambarde 28, et elle est guidée intérieurement par le bord 25 périphérique du plateau 24 tournant.

Lors du basculement l'axe "A" principal de la préforme 12 demeure dans un plan vertical tangent au déplacement. Du fait du basculement de l'axe "A" principal dans le sens de déplacement des préformes 12, la face 18 de support de chaque préforme 12 demeure en permanence en contact avec le plateau 24 tournant d'une part, et le rail 36 d'autre part, par ses deux points d'appui. Ainsi, chaque préforme 12 est guidée de manière stable et efficace durant son redressement.

Comme représenté à la figure 11, une zone de transition est prévue à l'extrémité amont du secteur 20B angulaire de redressement. Dans cette zone de transition, l'interstice 34 est élargie progressivement jusqu'à atteindre sa largeur finale. Pour ce faire, la rambarde 28 s'éloigne radialement progressivement de l'axe "B" de rotation du plateau 24 tournant. Ceci permet aux préformes 12 alignées de rester constamment en contact avec la rambarde 28 sous l'effet de la force centrifuge. Les préformes 12 sont ainsi guidées de manière stables en position alignée même pendant leur redressement.

Si la rambarde 28 présentait une discontinuité, elle ne pourrait plus remplir son rôle de guidage au niveau de cette discontinuité. Les préformes 12 correctement alignées risquerait alors de tressauter de se retrouver mal positionnée, venant par exemple en biais en appui contre des préformes adjacentes et empêchant leur redressement.

Les préformes 12 ainsi redressées sont entraînées en rotation autour de leur axe principal par frottement contre le bord 25 externe du plateau 24 périphérique. Les préformes 12 sont ainsi déplacées autour du bol 20 dans le sens de rotation du plateau 24 tournant par roulement contre la rambarde 28 périphérique.

Pour améliorer ce phénomène de roulement des préformes 12 et ainsi augmenter la vitesse d'avancement des préformes 12 autour du plateau 24, le bord 25 externe du plateau 24 tournant comporte avantageusement une bande 38 de roulement qui présente un coefficient de frottement adapté pour permettre le roulement sans glissement du corps 14 de la préforme 12 contre la bande 38 de roulement. Un tel agencement est par exemple représenté à la figure 7.

En variante non représentée de l'invention qui peut remplacer l'agencement de la figure 7 ou être combiné avec ce même agencement, la rambarde est équipée d'une bande de roulement similaire qui est destinée à venir au contact du corps de préformes redressées.

Les préformes 12 redressées et alignées sont ainsi acheminées vers le troisième secteur 20C de triage dans lequel des préformes 12N mal alignées sont réexpédiées directement vers le premier secteur 20A d'alignement par différents moyens de triage telles que des roues démêleuses 40, 42 et un déflecteur 44.

Les moyens de triage permettent d'éjecter activement des préformes 12N incorrectement alignées vers le secteur 20A angulaire d'alignement pour permettre leur retour direct dans le flux des préformes arrivant en vrac par le déversoir 30. L'adverbe "activement" signifie que les moyens de triage sont aptes à fournir une impulsion aux préformes 12N non alignées pour retourner rapidement vers le premier secteur 20A angulaire.

Les préformes 12N incorrectement alignées peuvent être des préformes 12N non alignées. Une préforme 12N non alignée est une préforme couchées sur le plateau 24 tournant et appuyées radialement contre les cols 16 des préformes 12 correctement alignées et redressées. Ces préformes 12N non alignées présentent ainsi au moins une partie fait saillie radialement vers le centre du plateau 24 tournant par rapport aux cols 16 des préformes 12 correctement alignées.

Une préformes 12N incorrectement alignée peut aussi être une préforme 12N emboîtée dans une préforme 12 correctement alignées alignée qui défile ainsi parmi les préformes 12 correctement alignées.

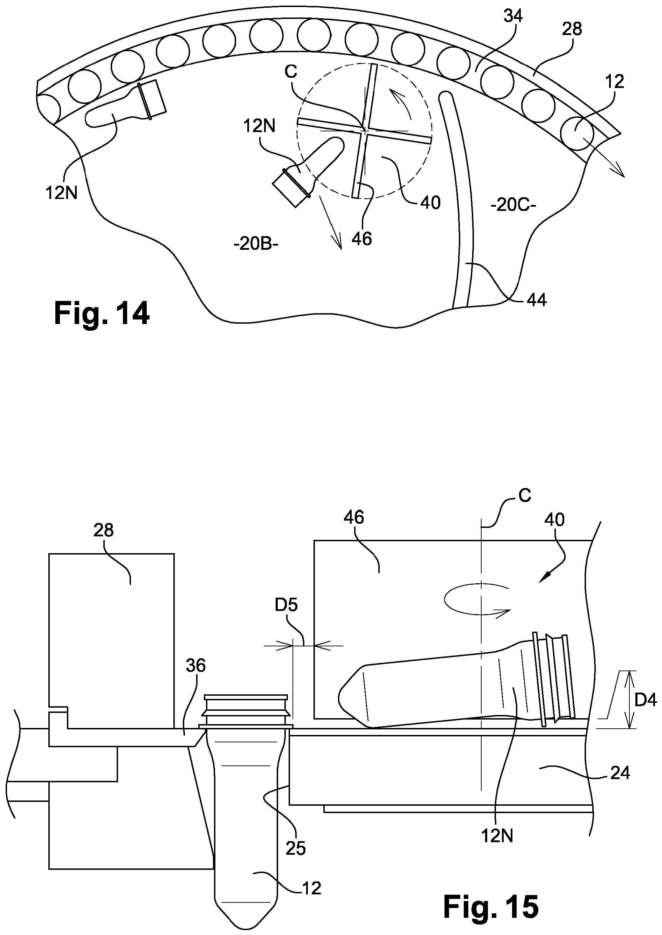

Comme représenté plus en détails à la figure 14, les premier moyens de triage sont ainsi formés par une première roue 40 à palettes 46 dite "roue démêleuse principale" qui est agencée tournante dans le bol 20, au-dessus du plateau 24 tournant autour d'un axe "C" fixe. Il s'agit ici d'un axe "C" vertical. L'espace balayé par les palettes 46 est ainsi cylindrique d'axe "C" vertical. La roue 40 démêleuse principale est agencée à une extrémité amont du troisième secteur 20C angulaire de triage.

Cet agencement de la roue 40 démêleuse principale en aval du secteur 20B angulaire de redressement des préformes 12 permet de garantir que les préformes 12 alignées ne seront pas perturbées par la roue 40 démêleuse. En effet, avant leur redressement, les préformes 12 alignées sont guidées extérieurement par la rambarde, mais elle ne sont pas guidées intérieurement. Seule la force centrifuge permet de les maintenir alignées. De ce fait, si une préforme 12N éjectée venait à toucher une préforme 12 alignées, elle risquerait de désaligner cette préforme 12.

En revanche, après leur redressement, les préformes 12 alignées et redressées sont guidées intérieurement par le bord 25 périphérique du plateau 24 tournant. Ainsi, les préformes 12 alignées sont peu susceptibles d'être désalignées par contact avec une préforme 12N éjectée.

Cette roue 40 démêleuse principale permet d'écarter les préformes 12N non alignées qui sont toujours couchées sur le plateau 24 tournant. Ces préformes 12N non alignées présentent ainsi au moins une partie fait saillie radialement vers le centre du plateau 24 tournant par rapport aux cols 16 des préformes 12 correctement alignées.

L'espace balayé par les palettes 46 a été représenté en traits interrompus aux figures. Les palettes 46 présentent ici une forme rectangulaire. De ce fait, l'espace balayé présente une forme cylindrique de révolution.

L'espace balayé exclut le passage des cols 16 des préformes 12 alignées correctement, ledit passage s'étendant au-dessus de l'interstice 34. En revanche, chaque palette 46 balaie un espace qui est situé au-dessus du plateau 24 tournant à une distance "D4" verticale inférieure au diamètre "D3" minimal d'une préforme 12, et à une distance "D5" radiale bord 25 du plateau 24 tournant qui est inférieure au diamètre "D3" minimal d'une préforme 12 pour éjecter les préformes 12N non alignées globalement en direction du centre du plateau 24 tournant, comme cela est représenté à la figure 15. A cet effet, la roue 40 démêleuse principale tourne à contre sens par rapport au plateau 24 tournant.

Les moyens de triage comportent aussi un déflecteur 44 fixe qui est agencé au-dessus du plateau 24 tournant à une distance verticale inférieure à celle du diamètre "D3" minimal du corps 14 des préformes 12 pour guider les préformes 12N éjectées par la roue 40 démêleuse principale en direction du premier secteur 20A angulaire. Lesdites préformes 12N non alignées sont guidées par le déflecteur 44 jusqu'en aval du passage 32 de sortie selon le sens de rotation du plateau 24 tournant. Ceci permet d'éviter que des préformes 12N non alignées se retrouvent "bloquées" dans ce troisième secteur 20C angulaire de triage.

Comme cela est représenté à la figure 3, le déflecteur 44 s'étend ainsi depuis le bord 25 externe du plateau 24 tournant, juste en aval de la roue 40 démêleuse principale en se rapprochant en bras de spirale vers le centre du plateau 24 tournant en aval du passage 32 de sortie. Un intervalle est réservé radialement entre l'extrémité aval du déflecteur 44 et le déversoir 30 pour permettre le retour des préformes 12N éjectées par la roue 40 démêleuse principale vers le premier secteur 20A angulaire d'alignement.

Le déflecteur 44 garantit que dans l'espace délimité entre la face aval du déflecteur 44 et la rambarde 28, aucune préforme 12N non alignée n'est couchée sur le plateau 24 tournant.

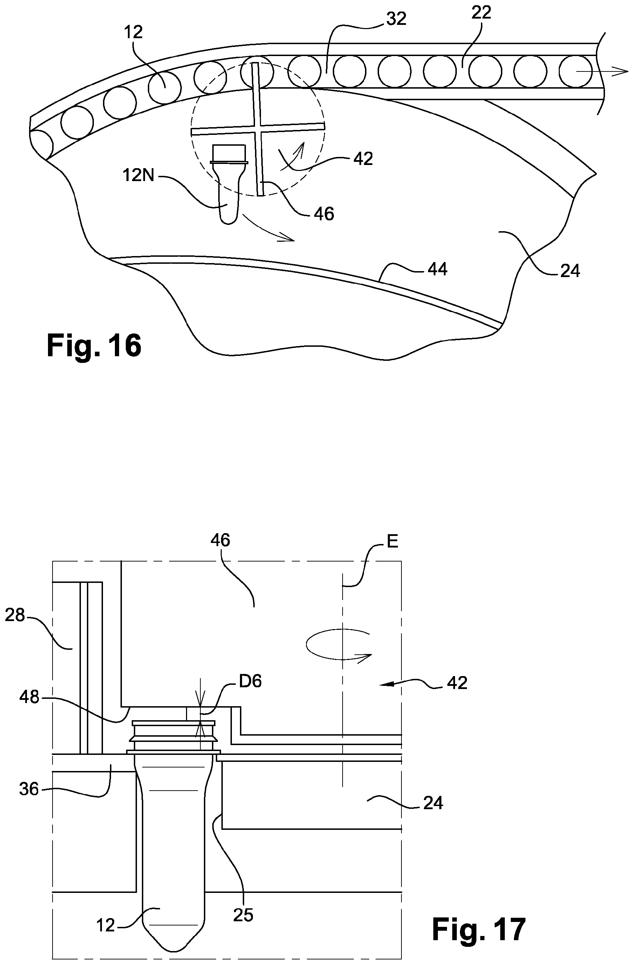

Les moyens de triage comportent aussi une deuxième roue 42 à palettes 46 dite roue 42 démêleuse secondaire qui est interposée entre le déflecteur 44 et le passage 32 de sortie selon le sens de rotation du plateau 24 tournant. Dans le mode de réalisation représenté à la figure 16, la roue 42 démêleuse secondaire est plus particulièrement agencée directement en amont du passage 32 de sortie de manière que les préformes 12N éjectées soient projetées directement contre la portion 28A de réception de la rambarde 28 sans risquer d'atteindre le passage 32 de sortie.

Cette deuxième roue 42 à palettes est destinée à éjecter les préformes 12N emboîtées qui défilent avec les préformes 12 correctement alignées, ou éventuellement des préformes 12N couchées sur les cols 16 des préformes 12 correctement alignées.

La roue 42 démêleuse secondaire tourne ici autour d'un axe vertical "E". L'espace balayé par les palettes 16 est ainsi cylindrique d'axe "E". Cet espace balayé est représenté en traits interrompus aux figures.

Chaque palette 46 balaie un espace qui s'étend verticalement au-dessus de l'interstice 34 à une distance verticale légèrement supérieure à la hauteur d'un col de préforme 12. Ainsi, chaque palette 46 passe verticalement au-dessus et à proximité du col des préformes 12 alignées correctement, à une distance "D6" inférieure à la hauteur du col d'une éventuelle préforme 12N emboîtée.

Chaque palette 46 présente à son extrémité libre une découpe 48 correspondant à la dimension d'un col 16 de préforme 12 destinée à être alignée correctement, comme cela est illustré à la figure 17. Ainsi, les palettes 46 balaient aussi un espace qui est situé à proximité de la face supérieure du plateau 24 tournant comme la première roue 40 démêleuse principale.

Ceci permet non seulement d'éjecter les préformes 12N emboîtées de la file des préformes 12 correctement alignées, mais aussi de garantir que ces préformes 12N seront éjectées sans possibilité de passer sous les palettes 46. Ceci permet d'éviter que les préformes 12N éjectées ne reviennent en direction du passage 32 de sortie.

Comme représenté aux figures, le convoyeur 22 est raccordé tangentiellement au plateau dans la continuité du passage 32 de sortie des préformes 12 correctement alignées et redressées. Le convoyeur 22 comporte une glissière horizontale formée d'un rail externe qui prolonge le rail 36 de la rambarde 28 et d'un rail parallèle interne qui prolonge tangentiellement le bord 25 externe du plateau 24 tournant. Les rails sont écartés de manière à supporter une préforme 12 redressée par sa face 18 de support, dans le cas présent par sa collerette. Cet agencement permet d'évacuer les préformes 12 redressées en une file sans jamais cesser de les guider.

Le convoyeur 22 comporte un dispositif de soufflerie (non représenté) qui permet de mouvoir les préformes 12 redressées. A cet effet, le dispositif de soufflerie comporte plusieurs évents qui soufflent de l'air vers les préformes 12 pour les pousser vers l'aval.

En variante, le convoyeur peut être équipé de tout autre moyen connu de déplacement des préformes alignées et redressées.

Le guidage constant des préformes à toutes les étapes du procédé et lors de la transition entre chacune des étapes permet de garantir que les préformes 12 seront déplacées de manière stable. Ceci permet notamment de faire tourner le plateau 24 tournant à grande vitesse pour augmenter le débit des préformes 12 sans risquer de désaligner des préformes 12 correctement alignées.

En outre, les préformes ne sont pas poussées par des éléments d'indexation. De ce fait, les préformes 12 se déplacent sans risque de grippage et de coincement.

Le dispositif selon l'invention est susceptible d'être adapté facilement à différents modèles de préformes. Il suffit en effet de remplacer des segments de rambarde 28 afin d'adapter la largeur de l'interstice 34 à la dimension du corps 14 et de la face 18 de support de chaque modèle, ainsi que de remplacer les bandes 38 de roulement associées. De tels segment sont aisés à fabriquer et rapides à changer.

En outre, il est possible de changer la deuxième roue 42 démêleuse secondaire pour adapter la forme de la découpe 38 aux dimensions du col de chaque modèle de préformes.

En variante, lorsque les modèles de préformes présentent de faibles variation de dimension de leur col, la deuxième roue 42 démêleuse secondaire n'a pas besoin d'être remplacée.

## Revendications

1. Dispositif (10) d'alignement en une file et de redressement de préformes (12), le dispositif (10) étant destiné à être appliqué à des préformes (12) axisymétriques présentant un col (16) séparé d'un corps (14) par une face (18) annulaire de support en saillie par rapport au corps (14), le dispositif (10) comportant un bol (20) de centrifugeuse formé par :
- un plateau (24) circulaire horizontal tournant autour d'un axe (B) vertical ;
- une rambarde (28) périphérique fixe;
- au moins un premier secteur (20A) angulaire d'alignement des préformes (12) contre la rambarde (28) ;
- au moins un deuxième secteur (20B) angulaire de redressement des préformes (12) qui est agencé en aval dudit premier secteur (20A) angulaire, et le long duquel le bol (20) présente un interstice (34) périphérique pour permettre le redressement de préformes (12) alignées soutenues par leur face (18) de support, le corps (14) pendant à l'extérieur du bol (20) à travers ledit interstice (34) tandis que le col (16) demeure à l'intérieur du bol (20) ;
- au moins un passage (32) de sortie agencé en aval dudit secteur (20B) angulaire de redressement selon le sens de rotation du plateau (24) ;
le dispositif comportant des moyens pour éjecter des préformes (12N) incorrectement alignées de la file des préformes (12) correctement alignées et redressées ;
dans laquelle:
sur ce secteur (20A) d'alignement, la rambarde (28) s'étend verticalement au dessus du plateau (24) tournant, de manière que le bord (25) externe du plateau (24) tournant est agencé à l'extérieur du bol (20) de centrifugeuse; au moins tout le long du deuxième secteur (20B) de redressement, la rambarde (28) présente un rail (36) de support de la face (18) de support; le rail (36) s'étend en saillie radialement vers l'intérieur au même niveau que la face supérieure du plateau (24) tournant pour délimiter l'interstice (34) vers l'extérieur, le rail (36) se prolonge jusqu'au passage (32) de sortie; le dispositif (10) comporte un convoyeur (22) de sortie des préformes alignées et redressées; le convoyeur (22) est raccordé tangentiellement au plateau (24) dans la continuité du passage (32) de sortie des préformes (12) correctement alignées et redressées;
**caractérisé en ce que**: lesdits moyens pour éjecter des préformes (12N) incorrectement alignées sont des moyens d'éjection actifs comportant une roue (40, 42) à palettes (46) qui est agencée tournante dans le bol (20) de centrifugeuse au-dessus du plateau (24) tournant autour d'un axe (C, E) fixe, l'espace balayé par les palettes (46) excluant le passage des cols (16) des préformes (12) correctement alignées;
la roue (40) démêleuse principale est agencée en aval du secteur (20B) angulaire de redressement;
le convoyeur (22) comporte une glissière horizontale formée d'un rail externe qui prolonge le rail (36) de la rambarde (28) et d'un rail parallèle interne qui prolonge tangentiellement le bord (25) externe du plateau (24) tournant, le rail externe et le rail interne sont écartés de manière à supporter une préforme (12) redressée par sa face (18) de support.

2. Dispositif (10) selon la revendication 1, **caractérisé en ce que** chaque palette (46) balaie au moins un espace qui est situé au-dessus du plateau (24) tournant à une distance (D4) verticale inférieure à un diamètre minimal du corps (14) de la préforme (12), et à une distance (D5) radiale bord du plateau (24) tournant qui est inférieure audit diamètre minimal de la préforme (12) pour éjecter les préformes (12N) incorrectement alignées globalement en direction du centre du plateau (24) tournant.

3. Dispositif (10) selon l'une quelconque des revendications précédentes, **caractérisé en ce que** chaque palette (46) balaie un espace qui s'étend verticalement au-dessus de l'interstice (34) à une distance sensiblement égale à la hauteur du col (16) d'une préforme (12) destinée à être alignée correctement.

4. Dispositif (10) selon la revendication précédente prise en combinaison avec la revendication 2, **caractérisé en ce que** chaque palette (46) présente une découpe (48) correspondant à la dimension d'un col (16) de préforme (12) destinée à être alignée correctement.

5. Dispositif selon l'une quelconque des revendications précédentes, **caractérisé en ce que** l'axe (C, E) de rotation de la roue (40, 42) est sensiblement vertical.

6. Dispositif selon l'une quelconque des revendications précédentes, **caractérisé en ce qu'**il comporte au moins un déflecteur (44) fixe qui est agencé au-dessus du plateau (24) tournant à une distance inférieure au diamètre minimal du corps (14) d'une préforme (12) et qui s'étend jusqu'en aval de la sortie en se rapprochant du centre du plateau (24) tournant selon le sens de rotation du plateau (24) tournant.

7. Dispositif selon la revendication 2 prise en combinaison avec la revendication précédente, **caractérisé en ce qu'**il comporte une première roue (40) à palettes (46) qui est agencée directement en amont du déflecteur (44).

8. Dispositif selon la revendication précédente prise en combinaison avec la revendication 4, **caractérisé en ce qu'**il comporte une deuxième roue (42) à palettes (46) qui est interposée entre le déflecteur (44) et le passage de sortie (32) selon le sens de rotation du plateau tournant.

9. Dispositif selon l'une quelconque des revendications 7 ou 8, **caractérisé en ce que** la première roue (40) à palettes (46) est agencée en aval du secteur (20B) angulaire de redressement.

## Patentansprüche

1. Vorrichtung (10) zum Ausrichten in einer Reihe und zum Aufrichten von Vorformen (12), wobei die Vorrichtung (10) dazu bestimmt ist, auf achsensymmetrische Vorformen (12) angewendet zu werden, die einen Hals (16) aufweisen, der von einem Körper (14) durch eine ringförmige Stützfläche (18), die in Bezug auf den Körper (14) vorsteht, getrennt ist, wobei die Vorrichtung (10) eine Schalenzentrifuge (20) aufweist, die durch Folgendes gebildet ist:
- eine horizontale kreisförmige Scheibe (24), die sich um eine vertikale Achse (B) dreht;
- eine feste umlaufende Reling (28);
- mindestens einen ersten Winkelbereich (20A) zum Ausrichten der Vorformen (12) an der Reling (28);
- mindestens einen zweiten Winkelbereich (20B) zum Aufrichten der Vorformen (12), der stromabwärts des ersten Winkelbereichs (20A) angeordnet ist und entlang dessen die Schale (20) einen umlaufenden Spalt (34) aufweist, um das Aufrichten von ausgerichteten Vorformen (12) zu ermöglichen, die durch ihre Stützfläche (18) gehalten werden, wobei der Körper (14) durch den Spalt (34) hindurch auf der Außenseite der Schale (20) hängt, während der Hals (16) im Inneren der Schale (20) verbleibt;
- mindestens einen Auslassdurchgang (32), der gemäß der Rotationsrichtung der Scheibe (24) stromabwärts des Winkelbereichs (20B) zum Aufrichten angeordnet ist;
wobei die Vorrichtung Mittel zum Ausstoßen von inkorrekt ausgerichteten Vorformen (12N) aus der Reihe von korrekt ausgerichteten und aufgerichteten Vorformen (12) umfasst;
wobei:
sich die Reling (28) in diesem Ausrichtungsbereich (20A) vertikal oberhalb der Drehscheibe (24) erstreckt, sodass der Außenrand (25) der Drehscheibe (24) außerhalb der Schalenzentrifuge (20) angeordnet ist; die Reling (28) mindestens entlang des gesamten zweiten Aufrichtungsbereichs (20B) eine Stützschiene (36) für die Stützfläche (18) aufweist; sich die Schiene (36) auf der gleichen Höhe wie die Oberseite der Drehscheibe (24) nach innen radial vorstehend erstreckt, um den Spalt (34) nach außen hin zu begrenzen, die Schiene (36) bis zu dem Auslassdurchgang (32) reicht; die Vorrichtung (10) einen Auslassförderer (22) für die ausgerichteten und aufgerichteten Vorformen umfasst; der Förderer (22) in Verlängerung des Auslassdurchgangs (32) für die korrekt ausgerichteten und aufgerichteten Vorformen (12) tangential mit der Scheibe (24) verbunden ist;
**dadurch gekennzeichnet, dass**: die Mittel zum Ausstoßen von inkorrekt ausgerichteten Vorformen (12N) aktive Ausstoßmittel sind, die ein Rad (40, 42) mit Flügeln (46) umfassen, das in der Schalenzentrifuge (20) oberhalb der Drehscheibe (24) um eine feste Achse (C, E) drehend angeordnet ist, wobei der von den Flügeln (46) überstrichene Raum den Durchgang der Hälse (16) der korrekt ausgerichteten Vorformen (12) ausnimmt;
das Hauptsortierrad (40) stromabwärts des Winkelbereichs (20B) zum Aufrichten angeordnet ist;
der Förderer (22) eine horizontale Gleitbahn umfasst, die durch eine außen liegende Schiene, die die Schiene (36) der Reling (28) verlängert, und eine parallele innen liegende Schiene, die den Außenrand (25) der Drehscheibe (24) tangential verlängert, gebildet ist, wobei die außen liegende Schiene und die innen liegende Schiene so beabstandet sind, dass sie eine aufgerichtete Vorform (12) an ihrer Stützfläche (18) stützen.

2. Vorrichtung (10) nach Anspruch 1, **dadurch gekennzeichnet, dass** jeder Flügel (46) mindestens einen Raum überstreicht, der sich in einem vertikalen Abstand (D4), der kleiner als ein minimaler Durchmesser des Körpers (14) der Vorform (12) ist, oberhalb der Drehscheibe (24) und in einem radialen Abstand (D5), der kleiner als der minimale Durchmesser der Vorform (12) ist, von dem Rand der Drehscheibe (24) entfernt befindet, um die inkorrekt ausgerichteten Vorformen (12N) allgemein in Richtung der Mitte der Drehscheibe (24) auszustoßen.

3. Vorrichtung (10) nach einem beliebigen der vorhergehenden Ansprüche, **dadurch gekennzeichnet, dass** jeder Flügel (46) einen Raum überstreicht, der sich vertikal oberhalb des Spalts (34) in einem Abstand erstreckt, der im Wesentlichen gleich der Höhe des Halses (16) einer Vorform (12) ist, die korrekt ausgerichtet werden soll.

4. Vorrichtung (10) nach dem vorhergehenden Anspruch in Kombination mit Anspruch 2, **dadurch gekennzeichnet, dass** jeder Flügel (46) einen Ausschnitt (48) aufweist, der der Größe eines Halses (16) einer Vorform (12), die korrekt ausgerichtet werden soll, entspricht.

5. Vorrichtung nach einem beliebigen der vorhergehenden Ansprüche, **dadurch gekennzeichnet, dass** die Rotationsachse (C, E) des Rades (40, 42) im Wesentlichen vertikal ist.

6. Vorrichtung nach einem beliebigen der vorhergehenden Ansprüche, **dadurch gekennzeichnet, dass** sie mindestens einen festen Deflektor (44) umfasst, der in einem Abstand, der kleiner als der minimale Durchmesser des Körpers (14) einer Vorform (12) ist, oberhalb der Drehscheibe (24) angeordnet ist und der sich gemäß der Rotationsrichtung der Drehscheibe (24) bis hinter den Auslass erstreckt und sich dabei der Mitte der Drehscheibe (24) nähert.

7. Vorrichtung nach Anspruch 2 in Kombination mit dem vorhergehenden Anspruch, **dadurch gekennzeichnet, dass** sie ein erstes Rad (40) mit Flügeln (46) umfasst, das direkt stromaufwärts des Deflektors (44) angeordnet ist.

8. Vorrichtung nach dem vorhergehenden Anspruch in Kombination mit Anspruch 4, **dadurch gekennzeichnet, dass** sie ein zweites Rad (42) mit Flügeln (46) umfasst, das gemäß der Rotationsrichtung der Drehscheibe zwischen den Deflektor (44) und den Auslassdurchgang (32) eingefügt ist.

9. Vorrichtung nach einem beliebigen der Ansprüche 7 oder 8, **dadurch gekennzeichnet, dass** das erste Rad (40) mit Flügeln (46) stromabwärts des Winkelbereichs (20B) zum Aufrichten angeordnet ist.

## Claims

1. Device (10) for aligning in a row and straightening preforms (12), the device (10) being intended to be applied to axisymmetric preforms (12) that have a neck (16) separated from a body (14) by an annular support face (18) that protrudes with respect to the body (14), the device (10) comprising a centrifuge bowl (20) formed by:
- a horizontal circular turntable (24) turning about a vertical axis (B);
- a fixed peripheral guard-bar (28);
- at least a first angular sector (20A) for aligning the preforms (12) against the guard-bar (28);
- at least a second angular sector (20B) for straightening the preforms (12), which is arranged downstream of said first angular sector (20A) and along which the bowl (20) has a peripheral gap (34) in order to allow aligned preforms (12), which are supported by their support face (18), to be straightened, the body (14) hanging outside of the bowl (20) through said gap (34) while the neck (16) remains inside the bowl (20);
- at least one outlet passage (32) arranged downstream of said straightening angular sector (20B) in the direction of rotation of the turntable (24);
the device comprising means for ejecting incorrectly aligned preforms (12N) from the row of correctly aligned and straightened preforms (12);
wherein:
in this alignment sector (20A), the guard-bar (28) extends vertically above the turntable (24) such that the outer edge (25) of the turntable (24) is arranged outside of the centrifuge bowl (20);
at least along the entire straightening second sector (20B), the guard-bar (28) has a rail (36) for supporting the support face (18);
the rail (36) protrudes radially inwards at the same level as the upper face of the turntable (24) in order to outwardly delimit the gap (34), the rail (36) extending as far as the outlet passage (32);
the device (10) comprises an outlet conveyor (22) for the aligned and straightened preforms;
the conveyor (22) is tangentially connected to the turntable (24) in continuity with the outlet passage (32) for the correctly aligned and straightened preforms (12);
**characterized in that**:
said means for ejecting incorrectly aligned preforms (12N) are active ejection means comprising a wheel (40, 42) with paddles (46) that is arranged so as to turn, within the centrifuge bowl (20) above the turntable (24), about a fixed axis (C, E), the space through which the paddles (46) sweep excluding the passage of the necks (16) of the correctly aligned preforms (12);
the primary sorting wheel (40) is arranged downstream of the straightening angular sector (20B);
the conveyor (22) comprises a horizontal slide formed of an outer rail that extends the rail (36) of the guard-bar (28) and of a parallel inner rail that tangentially extends the outer edge (25) of the turntable (24), the outer rail and the inner rail being spaced apart in such a manner as to support a straightened preform (12) by its support face (18).

2. Device (10) according to Claim 1, **characterized in that** each paddle (46) sweeps at least through a space situated above the turntable (24) at a vertical distance (D4) that is smaller than a minimum diameter of the body (14) of the preform (12), and at a radial distance (D5) from the edge of the turntable (24) that is smaller than said minimum diameter of the preform (12) in order to eject the incorrectly aligned preforms (12N) generally towards the centre of the turntable (24).

3. Device (10) according to either one of the preceding claims, **characterized in that** each paddle (46) sweeps through a space that extends vertically above the gap (34) at a distance that is substantially equal to the height of the neck (16) of a preform (12) that is intended to be correctly aligned.

4. Device (10) according to the preceding claim in combination with Claim 2, **characterized in that** each paddle (46) has a cutout (48) corresponding to the dimension of a neck (16) of a preform (12) that is intended to be correctly aligned.

5. Device according to any one of the preceding claims, **characterized in that** the axis (C, E) of rotation of the wheel (40, 42) is substantially vertical.

6. Device according to any one of the preceding claims, **characterized in that** it comprises at least one fixed deflector (44), which is arranged above the turntable (24) at a distance that is smaller than the minimum diameter of the body (14) of a preform (12) and which extends as far as a point downstream of the outlet by approaching the centre of the turntable (24) in the direction of rotation of the turntable (24).

7. Device according to Claim 2 in combination with the preceding claim, **characterized in that** it comprises a first wheel (40) with paddles (46), which is arranged directly upstream of the deflector (44).

8. Device according to the preceding claim in combination with Claim 4, **characterized in that** it comprises a second wheel (42) with paddles (46), which is interposed between the deflector (44) and the outlet passage (32) in the direction of rotation of the turntable.

9. Device according to either one of Claims 7 and 8, **characterized in that** the first wheel (40) with paddles (46) is arranged downstream of the straightening angular sector (20B).
